# EUROPEAN PATENT APPLICATION

(11) **EP 2 869 637 A1**
(43) Date of publication of application: **06.05.2015**
(21) Application number: 13808913.1
(22) Date of filing: 27.06.2013
(51) Int. Cl.: H04W 48/02, H04W 4/22, H04W 48/10

(54) **MOBILE COMMUNICATION METHOD, CORE NETWORK DEVICE, WIRELESS ACCESS NETWORK DEVICE, AND MOBILE STATION**

(30) Priority: 29.06.2012 JP 2012147266
(71) Applicant: NTT DOCOMO, INC., Chiyoda-ku Tokyo 100-6150 (JP)
(72) Inventor: AOYAGI, Kenichiro, Tokyo 100-6150 (JP); ABETA, Sadayuki, Tokyo 100-6150 (JP); MASUDA, Masafumi, Tokyo 100-6150 (JP); HAPSARI, Wuri Andarmawanti, Tokyo 100-6150 (JP)
(74) Representative: Hoffmann Eitle
(86) International application number: PCT/JP2013/067663
(87) International publication number: WO 2014/003122

(57) **Abstract**

Network congestion is avoided, which congestion would be otherwise be caused by simultaneous transmission of "RRC Connection Requests" in a case where emergency information is transmitted to mobile stations UE in a broadcast area. A mobile communication method according to the present invention includes: a step A of a core network apparatus transmitting "Write-Replace Warning Request" containing "Overload Action/Traffic Load Reduction Indication" commanding to invoke access restriction to a radio access network apparatus if the core network apparatus is commanded to broadcast emergency information in a broadcast area and if an access restriction invoking condition is met; and a step B of the radio access network broadcasting the emergency information in the broadcast area and invoking the access restriction to a mobile station UE in the broadcast area.

## Description

### TECHNICAL FIELD

The present invention relates to a mobile communication method, a core network apparatus, a radio access network apparatus, and a mobile station.

### BACKGROUND ART

Conventionally, an emergency information broadcast system can broadcast relevant emergency information to mobile stations UE in a broadcast area without causing network congestion. The emergency information broadcast system includes a PWS (Public Warning System) such as an ETWS (Earthquake and Tsunami Warning System), a CMAS (Commercial Mobile Alert System), a KPAS (Korean Public Alert System) and an EU-Alert. The emergency information broadcast system also includes and a CBS (Cell Broadcast Service).

Upon receipt of the emergency information, each mobile station UE draws the attention of its user to the reception of the emergency information by ringing with vibration, displaying a pop-up, or the like.

### PRIOR ART DOCUMENT

### NON-PATENT DOCUMENT

Non-patent document 1: 3GPP TS23.041
Non-patent document 2: 3GPP TS25.331
Non-patent document 3: 3GPP TS36.331

### SUMMARY OF THE INVENTION

However, in a conventional emergency information broadcast system, the mobile station UE is possibly configured to turn on its backlight or the like autonomously upon receipt of the emergency information so as to show the emergency information on the display.

Further, there is a case where the mobile station UE includes an application or the like to be activated in conjunction with the turning-on of the backlight or the like.

In such a case, when emergency information is transmitted to the mobile stations UE in a broadcast area, such mobile stations UE presumably transmit "RRC Connection Request (RRC connection request signal)" at the same time, and such simultaneous transmission leads to a problem of causing network congestion. This problem is particularly noticeable when the broadcast area is large.

The present invention has been made in view of the problem described above and an objective thereof is to provide a mobile communication method, a core network apparatus, a radio access network apparatus, and a mobile station capable of avoiding network congestion which would be otherwise caused by simultaneous transmission of "RRC Connection Requests" in a case where emergency information is transmitted to mobile stations UE in a broadcast area.

A first feature of the present invention is summarized as a mobile communication method including: a step A of a core network apparatus transmitting a warning request signal containing indication information commanding to invoke access restriction to a radio access network apparatus if the core network apparatus is commanded to broadcast emergency information in a broadcast area and if an access restriction invoking condition is met; and a step B of the radio access network broadcasting the emergency information in the broadcast area and invoking the access restriction to a mobile station in the broadcast area.

A second feature of the present invention is summarized as a mobile communication method including: a step A of a radio access network apparatus determining whether or not to invoke access restriction to a mobile station in a broadcast area upon receipt of a warning request signal commanding to broadcast emergency information in the broadcast area, the determination being made based on predetermined information contained in the warning request signal; and a step B of the radio access network broadcasting the emergency information in the broadcast area and invoking the access restriction to the mobile station in the broadcast area upon determining to invoke the access restriction to the mobile station in the broadcast area.

A third feature of the present invention is summarized as a core network apparatus including a transmission unit configured to transmit a warning request signal containing indication information commanding to invoke access restriction to a radio access network apparatus if the core network apparatus is commanded to broadcast emergency information in a broadcast area and if an access restriction invoking condition is met.

A fourth feature of the present invention is summarized as a radio access network apparatus including: a determination unit configured to determine whether or not to invoke access restriction to a mobile station in a broadcast area upon receipt of a warning request signal commanding to broadcast emergency information in the broadcast area, the determination being made based on predetermined information contained in the warning request signal; and a transmission unit configured to broadcast the emergency information in the broadcast area and invoke the access restriction to the mobile station in the broadcast area when the determination unit determines to invoke the access restriction to the mobile station in the broadcast area.

### BRIEF DESCRIPTION OF THE DRAWINGS

[Fig. 1] Fig. 1 is an overall configuration diagram of an emergency information broadcast system according to a first embodiment of the present invention.
[Fig. 2] Fig. 2 is a functional block diagram of a mobility management node according to the first embodiment of the present invention.
[Fig. 3] Fig. 3 is a diagram showing a format example of "Write-Replace Warning Request" transmitted by the mobility management node according to the first embodiment of the present invention.
[Fig. 4] Fig. 4 is a sequence diagram showing operation of the emergency information broadcast system according to the first embodiment of the present invention.
[Fig. 5] Fig. 5 is a functional block diagram of a radio base station according to Modification 1 of the present invention.
[Fig. 6] Fig. 6 is an overall configuration diagram of an emergency information broadcast system according to Modification 2 of the present invention.
[Fig. 7] Fig. 7 is a sequence diagram showing operation of the emergency information broadcast system according to Modification 2 of the present invention.

### MODE FOR CARRYING OUT THE INVENTION

### (Emergency Information Broadcast System according to First Embodiment of the Present Invention)

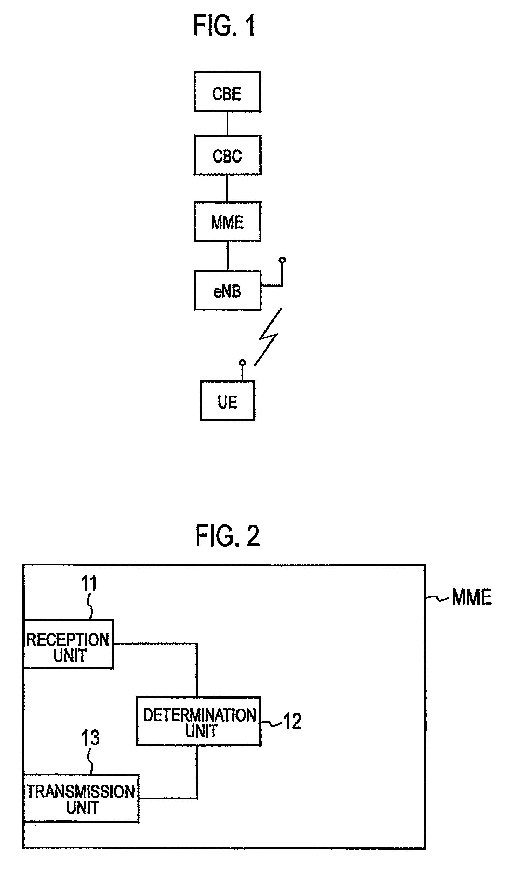

An emergency information broadcast system according to a first embodiment of the present invention is described with reference to Figs. 1 to 4.

As an example, this embodiment describes an emergency information broadcast system in an LTE mobile communication system. However, the present invention is not limited to such an emergency information broadcast system, and can be applied to an emergency information broadcast system in a mobile communication system of a different scheme.

As shown in Fig. 1, the emergency information broadcast system according to this embodiment includes a cell broadcast entity CBE, a cell broadcast center CBC, a mobility management node MME (Mobility Management Entity), a radio base station eNB, and a mobile station UE.

As shown in Fig. 2, the mobility management node MME includes a reception unit 11, a determination unit 12, and a transmission unit 13.

The reception unit 11 is configured to receive various signals from the cell broadcast center CBC and the radio base station eNB.

For example, the reception unit 11 is configured to receive "Write-Replace Warning Request" from the cell broadcast center CBC, and receive "Write-Replace Warning Response" from the radio base station eNB.

The determination unit 12 is configured to determine whether an access restriction invoking condition is met or not.

For example, the determination unit 12 may be configured to determine whether the access restriction invoking condition is met or not based on logic predetermined according to the cell broadcast center CBC which is the source of broadcasting the emergency information, the size of the broadcast area, the number of cells in the broadcast area, the number of mobile stations UE camping on the cells in the broadcast area, and the like, or in other words, determine whether or not to invoke access restriction to the mobile stations UE in the broadcast area.

The determination unit 12 may be configured to also determine an area (or a cell) to apply the access restriction, a restriction rate or restriction time used in the access restriction, or the like.

The transmission unit 13 is configured to transmit various signals to the cell broadcast center CBC and the radio base station eNB.

For example, the transmission unit 13 is configured to transmit "Write-Replace Warning Confirm" to the cell broadcast center CBC, and transmit "Write-Replace Warning Request" to the radio base station eNB.

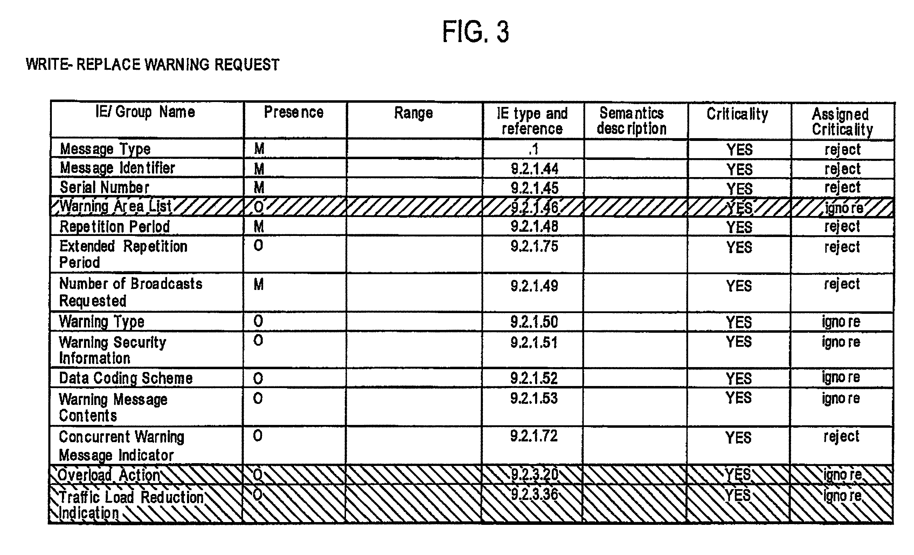

The transmission unit 13 is configured to transmit "Write-Replace Warning Request" containing "Overload Action/Traffic Load Reduction Indication" commanding to invoke access restriction as shown in Fig 3 when the determination unit 12 determines to invoke access restriction to the mobile stations UE in the broadcast area.

"Warning Area List" shown in Fig 3 indicates a broadcast area for the emergency information.

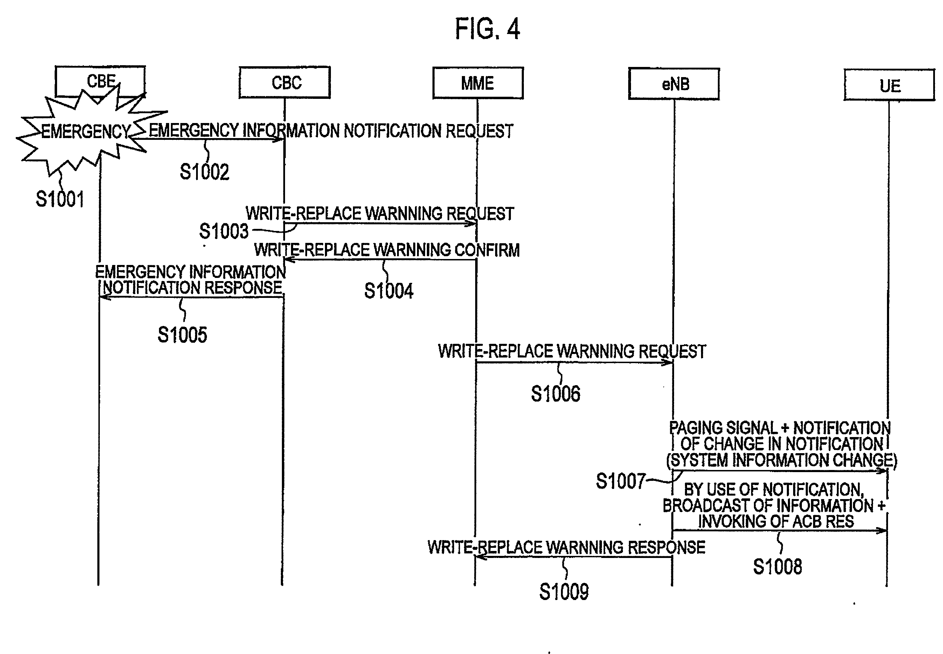

With reference to Fig. 4, a description is given below of operation of the emergency information broadcast system according to this embodiment.

As shown in Fig. 4, upon generating emergency information to be broadcasted in Step S1001, the cell broadcast entity CBE transmits an emergency information broadcast request to the cell broadcast center CBC in Step S1002. Then, in Step S1003, the cell broadcast center CBC transmits "Write-Replace Warning Request" to the mobility management node MME.

In Step S1004, the mobility management node MME transmits "Write-Replace Warning Confirm" to the cell broadcast center CBC, and the cell broadcast center CBC transmits an emergency information broadcast response to the cell broadcast entity CBE.

Upon receiving the "Write-Replace Warning Request" and determining that the access restriction invoking condition is met, the mobility management node MME determines to invoke access restriction to the mobile stations UE in the broadcast area, and transmits "Write-Replace Warning Request" to the radio base station eNB in Step S1006, the "Write-Replace Warning Request" containing "Overload Action/Traffic Load Reduction Indication" commanding to invoke access restriction.

The radio base station eNB transmits a notification of change in notification to the mobile station UE in the broadcast area by use of a paging signal in Step S1007, and in Step S1008, notifies the mobile station UE of the emergency information and invokes access restriction to the mobile station UE by use of notification (e.g., SIB10/SIB11) (see, for example, 3GPP TS25.331/TS36.331).

For example, the radio base station eNB invokes the access restriction to the mobile station UE in the broadcast area by notifying the mobile station UE of a restriction rate for an AC (access class) of a restriction target by use of notification.

Even if the backlight or the like is turn on in response to the reception of the emergency information, the mobile station UE does not activate an application associated with the turning-on, and does not transmit "RRC Connection Request" to a predetermined APN (Access Point Name).

The mobile station UE is configured to check whether access restriction is invoked thereon or not upon receipt of emergency information. More specifically, the mobile station UE is configured to check whether notification containing access restriction information has been transmitted or not upon receipt of notification containing the emergency information.

Then, the mobile station UE is configured to withhold transmission of "RRC Connection Requests" until this check is complete.

In Step S1009, the radio base station eNB transmits "Write-Replace Warning Response" to the mobility management node MME.

According to the emergency information broadcast system according to this embodiment, the radio base station eNB can transmit emergency information to the mobile station UE in the broadcast area and invoke access restriction to the mobile station UE according to the "Overload Action/Traffic Load Reduction Indication" contained in the "Write-Replace Warning Request" received by the radio base station eNB from the mobility management node MME. This can avoid network congestion which would be otherwise caused if the mobile stations UE in the broadcast area transmit "RRC Connection Requests" simultaneously.

### (Modification 1)

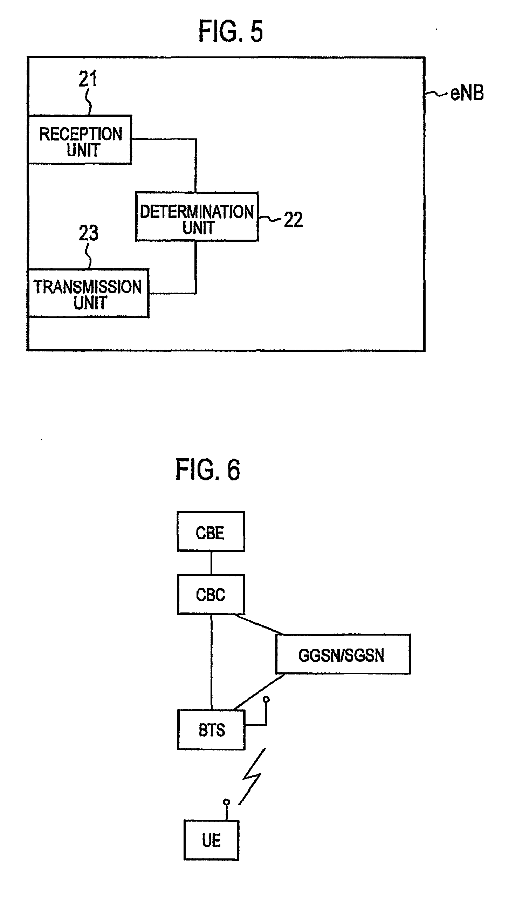

With reference to Fig. 5, a description is given of an emergency information broadcast system according to Modification 1 of the present invention. The following description of the emergency information broadcast system according to Modification 1 focuses on differences from the emergency information broadcast system according to the first embodiment described above.

As shown in Fig. 5, the radio base station eNB according to Modification 1 includes a reception unit 21, a determination unit 22, and a transmission unit 23.

The reception unit 21 is configured to receive various signals from the mobility management node MME and the mobile station UE.

For example, the reception unit 21 is configured to receive "Write-Replace Warning Request" from the mobility management node MME.

The determination unit 22 is configured to determine whether an access restriction invoking condition is met or not based on predetermined information (such as, for example, "Warning Area List") contained in the "Write-Replace Warning Request" received from the mobility management node MME.

The determination unit 22 may be configured to determine whether the access restriction invoking condition is met or not based on logic predetermined according to the cell broadcast center CBC which is the source of broadcasting the emergency information, the size of the broadcast area, the number of cells in the broadcast area, the number of mobile stations UE camping on the cells in the broadcast area, and the like, or in other words, determine whether or not to invoke access restriction to the mobile stations UE in the broadcast area.

The determination unit 22 may be configured to also determine an area (or a cell) to apply the access restriction, a restriction rate or restriction time used in the access restriction, or the like.

The transmission unit 23 is configured to transmit various signals to the mobility management node MME and the mobile station UE.

For example, the transmission unit 23 is configured to transmit "Write-Replace Warning Conform" to the mobility management node MME, and transmit a paging signal and notification to the mobile station UE in the broadcast area.

The transmission unit 23 is configured to transmit a notification of change in notification by use of a paging signal as well as notifies of emergency information and invokes access restriction by use of notification (e.g., SIB10/SIB11) when the determination unit 22 determines to invoke access restriction to the mobile station UE in the broadcast area.

Note that the mobility management node MME of the emergency information broadcast system according to Modification 1 may include the function of the determination unit 12 shown in Fig. 2, or does not have to include the function of the determination unit 12 shown in Fig. 2.

### (Modification 2)

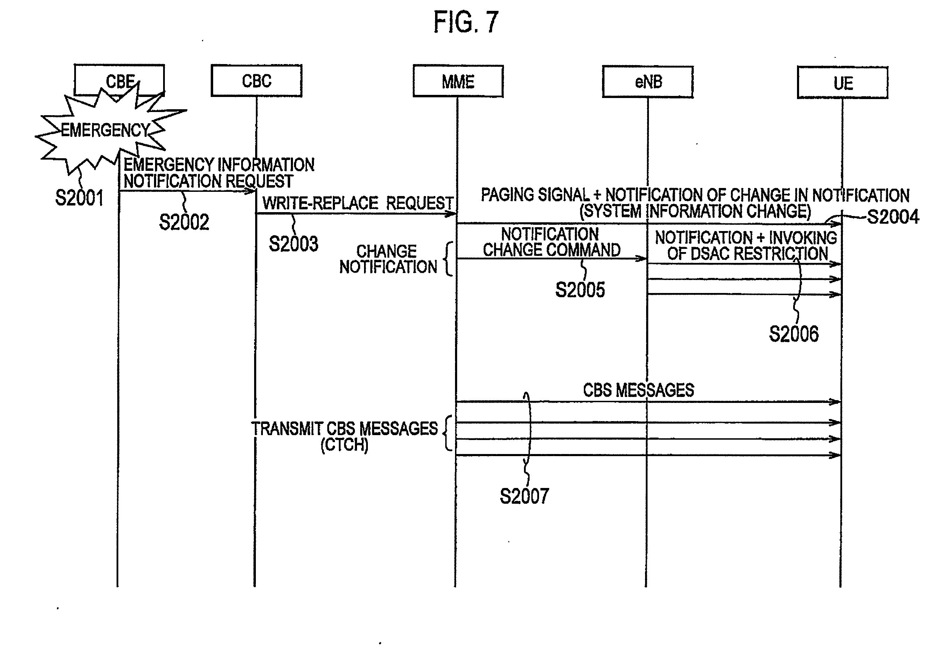

With reference to Figs. 6 and 7, a description is given of an emergency information broadcast system according to Modification 2 of the present invention. The following description of the emergency information broadcast system according to Modification 1 focuses on differences from the emergency information broadcast systems according to the first embodiment and Modification 1 described above.

As an example, Modification 2 describes an emergency information broadcast system in a mobile communication system of a UTRAN (Universal Terrestrial Random Access Network) scheme.

As shown in Fig. 6, the emergency information broadcast system according to Modification 2 includes the cell broadcast entity CBE, the cell broadcast center CBC, a packet switch GGSN/SGSN (Gateway General Packet radio service Support Node/Serving General packet radio service Support Node), a radio network control station RNC (Radio Network Center), a radio base station BTS, and a mobile station UE.

With reference to Fig. 7, a description is given of operation of the emergency information broadcast system according to Modification 2.

As shown in Fig. 7, when emergency information to be broadcasted is generated in Step S2001, the cell broadcast entity CBE transmits an emergency information broadcast request to the cell broadcast center CBC in Step S2002, and the cell broadcast center CBC transmits "Write-Replace Warning Request" to the radio network control station RNC in Step S2003.

The cell broadcast center CBC may transmit the "Write-Replace Warning Request" to the radio network control station RNC via the packet switch GGSN/SGSN.

According to "Overload Action/Traffic Load Reduction Indication" contained in the received "Write-Replace Warning Request," the radio network control station RNC transmits a notification of change in notification by use of a paging signal in Step S2004, and transmits a notification change command to the radio base station BTS in Step S2005.

In Step S2006, the radio base station BTS invokes access restriction (e.g., DSAC restriction) on the mobile stations UE in the broadcast area by use of notification (e.g., SIB3).

In Step S2007, the radio base station BTS transmits a CBS message as emergency information to the mobile station UE in the broadcast area via a common traffic channel (CTCH).

Then, even if the backlight or the like is turned on in response to the receipt of the emergency information, the mobile station UE does not activate an application associated with the turning-on and does not transmit "RRC Connection Request" to a predetermined APN.

The mobile station UE is configured to check whether access restriction is invoked thereon or not upon receipt of the emergency information. More specifically, the mobile station UE is configured to check whether notification containing access restriction information has been transmitted or not upon receipt of notification containing the emergency information.

Then, the mobile station UE is configured to withhold transmission of "RRC Connection Request" until this check is complete.

The features of the above-described embodiment may also be expressed as follows.

A first feature of this embodiment is summarized as a mobile communication method including: a step A of a core network apparatus (an mobility management node MME, a packet switch GGSN/SGSN, a cell broadcast center CBC or the like) transmitting a "Write-Replace Warning Request (a warning request signal)" containing "Overload Action/Traffic Load Reduction Indication (indication information)" commanding to invoke access restriction to a radio access network apparatus (a radio base station or a radio network control station RNC) if the core network apparatus is commanded to broadcast emergency information in a broadcast area and if an access restriction invoking condition is met; and a step B of the radio access network broadcasting the emergency information in the broadcast area and invoking the access restriction to a mobile station UE in the broadcast area.

A second feature of this embodiment is summarized as a mobile communication method including: a step A of a radio access network apparatus determining whether or not to invoke access restriction to a mobile station UE in a broadcast area upon receipt of a "Write-Replace Warning Request (a warning request signal) " commanding to broadcast emergency information in the broadcast area, the determination being made based on predetermined information (for example, "Warning Area List") contained in the "Write-Replace Warning Request"; and a step B of the radio access network broadcasting the emergency information in the broadcast area and invoking the access restriction to the mobile station UE in the broadcast area upon determining to invoke the access restriction to the mobile station UE in the broadcast area.

In the first and second features of this embodiment, in the step B, the radio access network invokes the access restriction by use of notification.

In the first and second features of this embodiment, in the step B, the radio access network invokes the access restriction by use of an "RRC Connection Request (an RRC connection rejection signal)".

A third feature of this embodiment is summarized as an mobility management node MME (a core network apparatus) including a transmission unit 13 configured to transmit a "Write-Replace Warning Request" containing "Overload Action/Traffic Load Reduction Indication" commanding to invoke access restriction to a radio base station eNB (a radio access network apparatus) if the core network apparatus is commanded to broadcast emergency information in a broadcast area and if an access restriction invoking condition is met.

A fourth of this embodiment is summarized as a radio base station eNB (a radio access network apparatus) including: a determination unit 22 configured to determine whether or not to invoke access restriction to a mobile station UE in a broadcast area upon receipt of a "Write-Replace Warning Request" commanding to broadcast emergency information in the broadcast area, the determination being made based on predetermined information (for example, "Warning Area List") contained in the "Write-Replace Warning Request"; and a transmission unit 23 configured to broadcast the emergency information in the broadcast area and invoke the access restriction to the mobile station UE in the broadcast area when the determination unit determines to invoke the access restriction to the mobile station UE in the broadcast area.

A fifth of this embodiment is summarized as a mobile station UE in which is configured to, when receiving emergency information, withhold transmission of an "RRC Connection Request (a connection request signal)" for a period until the mobile station UE completes checking whether access restriction is invoked thereon or not.

It should be noted that the foregoing operations of the mobile station UE, the radio base station eNB, and the mobility management node MME may be implemented by hardware, may be implemented by a software module executed by a processor, or may be implemented in combination of the two.

The software module may be provided in a storage medium in any format, such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to a processor so that the processor can read and write information from and to the storage medium. Instead, the storage medium may be integrated in a processor. The storage medium and the processor may be provided inside an ASIC. Such an ASIC may be provided in the mobile station UE, the radio base station eNB, and the mobility management node MME. Otherwise, the storage medium and the processor may be provided as discrete components inside the mobile station UE, the radio base station eNB, and the mobility management node MME.

Hereinabove, the present invention has been described in detail by use of the foregoing embodiments. However, it is apparent to those skilled in the art that the present invention should not be limited to the embodiments described in the specification. The present invention can be implemented as an altered or modified embodiment without departing from the spirit and scope of the present invention, which are determined by the description of the scope of claims. Therefore, the description of the specification is intended for illustrative explanation only and does not invoke any limited interpretation on the present invention.

Note that the entire content of Japanese Patent Application No. 2012-147266 (filed on June 29, 2012) is incorporated by reference in the present specification.

### INDUSTRIAL APPLICABILITY

As described above, the present invention can provide a mobile communication method, a core network apparatus, a radio access network apparatus, and a mobile station capable of avoiding network congestion which would be otherwise caused by simultaneous transmission of "RRC Connection Requests" in a case where emergency information is transmitted to mobile stations UE in the broadcast area.

### EXPLANATION OF THE REFERENCE NUMERALS

- UE: mobile station
- ENb: radio base station
- MME: mobility management node
- 11, 21: reception unit
- 12, 22: determination unit
- 13, 23: transmission unit

## Claims

1. A mobile station, wherein
the mobile station is configured to, when receiving emergency information, withhold transmission of a predetermined connection request signal for a predetermined period until the mobile station completes checking whether access restriction is invoked thereon or not.

2. A mobile communication method comprising:
a step A of a core network apparatus transmitting a warning request signal containing indication information commanding to invoke access restriction to a radio access network apparatus if the core network apparatus is commanded to broadcast emergency information in a broadcast area and if an access restriction invoking condition is met; and
a step B of the radio access network broadcasting the emergency information in the broadcast area and invoking the access restriction to a mobile station in the broadcast area.

3. A mobile communication method comprising:
a step A of a radio access network apparatus determining whether or not to invoke access restriction to a mobile station in a broadcast area upon receipt of a warning request signal commanding to broadcast emergency information in the broadcast area, the determination being made based on predetermined information contained in the warning request signal; and
a step B of the radio access network broadcasting the emergency information in the broadcast area and invoking the access restriction to the mobile station in the broadcast area upon determining to invoke the access restriction to the mobile station in the broadcast area.

4. The mobile station method according to any one of claims 2 and 3, wherein
in the step B, the radio access network invokes the access restriction by use of notification.

5. The mobile station method according to any one of claims 2 and 3, wherein
in the step B, the radio access network invokes the access restriction by use of an RRC connection rejection signal.

6. A core network apparatus comprising
a transmission unit configured to transmit a warning request signal containing indication information commanding to invoke access restriction to a radio access network apparatus if the core network apparatus is commanded to broadcast emergency information in a broadcast area and if an access restriction invoking condition is met.

7. A radio access network apparatus comprising:
a determination unit configured to determine whether or not to invoke access restriction to a mobile station in a broadcast area upon receipt of a warning request signal commanding to broadcast emergency information in the broadcast area, the determination being made based on predetermined information contained in the warning request signal; and
a transmission unit configured to broadcast the emergency information in the broadcast area and invoke the access restriction to the mobile station in the broadcast area when the determination unit determines to invoke the access restriction to the mobile station in the broadcast area.
